# EUROPÄISCHE PATENTSCHRIFT

(11) **EP 0 531 573 B1**
(45) Veröffentlichungstag und Bekanntmachung des Hinweises auf die Patenterteilung: **04.08.1999**
(21) Anmeldenummer: 91115571.1
(22) Anmeldetag: 13.09.1991
(51) Int. Cl.: H04Q 3/545

(54) **Verfahren zum Berechtigungsverifizierten Zugriff auf temporär belegbare Datenspeicherbereiche in einer Datenbasis einer programmgesteuerten Kommunikationsanlage**
Method for access with verification of autorization to temporarily allocatable memory areas in a data base of a program controlled communications exchange
Méthode d'accès avec vérification d'autorisation aux régions de mémoire à allocation temporaire dans une base de données d'un central de communication à commande programmée

(43) Veröffentlichungstag der Anmeldung: 17.03.1993
(73) Patentinhaber: SIEMENS AKTIENGESELLSCHAFT, 80333 München (DE)
(72) Erfinder: Speitkamp, Burkhard, Dipl.-Math., W-8000 München 71 (DE)

(56) Entgegenhaltungen:
- DE-A- 2 849 348
- INTERNATIONAL SWITCHING SYMPOSIUM 1987, SESSION B3, PAPER 3. Bd. 1, 15. März 1987, PHOENIX US Seiten 1 - 8; J.JAUDIER ET AL.: 'A New Architecture and an Enhanced Technology for Telephone Exchange Main Processors'
- NTZ NACHRICHTENTECHNISCHE ZEITSCHRIFT. Bd. 42, Nr. 7, Juli 1989, BERLIN DE Seiten 424 - 426; A.MAHER: 'Koordinationsprozessor des Vermittlungssystems EWSD'
- INTERNATIONAL SWITCHING SYMPOSIUM 1972 6. Juni 1972, CAMBRIDGE MASS. US Seiten 570 - 576; M.WARD ET AL.: 'Software Security in a Stored Program Controlled Switching System'
- PHOENIX CONFERENCE ON COMPUTERS AND COMMUNICATIONS 20. März 1985, SCOTTSDALE US Seiten 185 - 189; B.A.LAWS ET AL.: 'MCPOS - A Realtime Telephony Operating System'

## Beschreibung

Die Erfindung betrifft ein Verfahren gemäß dem Oberbegriff des Patentanspruchs 1.

Die Funktionsabläufe in komplexen Kommunikationssystemen werden insbesondere auf dem Gebiet der privaten Kommunikationstechnik von Kommunikationsanlagen gesteuert, die im Prinzip eine programmierbare digitale Datenverarbeitungsanlage darstellen. Um den komplexen Anforderungen gerecht werden zu können, die in einem, z. B. aus 'Sonderausgabe Telcom Report', "ISDN im Büro", Siemens AG, 1985, ISBN 3-8009-3846-4, bekannten Kommunikationssystem auftreten, ist in der Kommunikationsanlage eine modulare und mehrschichtige Softwarearchitektur realisiert, in der ein Zusammenwirken einer Vielzahl von funktions- und aufgabenindividuell strukturierten Systemprozessen vorgesehen ist.

Eines dieser Systemprozesse dient zur zentralen Verwaltung der im Kommunikationssystem zur Bearbeitung anfallenden Daten; z.B. der kunden- und anlagenindividuellen Daten und insbesondere derjenigen Daten, die im Zusammenhang mit der Erstellung und Aufrechterhaltung einer jeweiligen Verbindung zwischen kommunizierenden Partnern erstellt und bearbeitet werden müssen.

Jeder Systemprozeß in der Softwarearchitektur muß mit der Datenbasis in Verbindung treten, wenn in ihm der Bedarf zur Hinterlegung von Daten entsteht oder bereits bestehende Daten gelesen bzw. geändert werden müssen. Das Zusammenwirken zwischen den einzelnen Systemprozessen und der Datenbasis wird von einem gewissermaßen übergeordneten Systemprozeß unterstützt, der als Betriebssystem bezeichnet wird. Für die programmtechnische Verständigung zwischen den Systemprozessen und der Datenbasis ist eine Software-Schnittstelle realisiert, die auf ein spezielles Verständigungsverfahren ausgerichtet ist.

Dieses Verständigungsverfahren sieht vor, daß diejenigen Systemprozesse, die zur Hinterlegung von Daten Speicherplätze benötigen, diesen Speicherbedarf in Form eines Belegungsantrages an die Datenbasis melden und von dieser zu jedem Belegungsantrag einen bestimmten Datenspeicherbereich im physikalischen Speicher zugeteilt bekommen, wobei in der Regel die physikalische Adresse des betreffenden Datenspeicherbereiches in Form eines Adreßcodewortes als Belegungsbestätigung dem beantragenden Systemprozeß zurückgesendet wird.

Für einen Zugriff auf diesen Datenspeicherbereich muß dann das bei der Belegung zurückgesendete Adreßcodewort wieder der Datenbasis übermittelt werden, die dann den eigentlichen Zugriff auf den betreffenden Datenspeicherbereich ausführt; ein direkter Zugriff eines Systemprozesses auf den Datenspeicher ist nicht vorgesehen.

Aus der Sicht der Systemprozesse ist die Belegungsbestätigung lediglich ein Identifikator für einen Datenspeicherbereich. Jeder Systemprozeß kann im Prinzip beliebig viele Datenspeicherbereiche belegen und kann, sofern er die zugehörigen Adreßcodeworte kennt, auf alle belegten Datenspeicherbereiche zugreifen, z. B. wird in der Kommunikationsanlage von einem bestimmten Systemprozeß zu jeder Verbindung, die aufgebaut wird, ein dieser Verbindung individuell zugeordneter Datenspeicherbereich belegt. Müssen die eine jeweilige Verbindung betreffenden Daten von einem anderen Systemprozeß erstellt oder geändert werden, so muß sich der betreffende Systemprozeß zunächst darüber informieren - in der Regel mittels Systemprozeßkommunikation - welches Adreßcodewort bei der Belegung des betreffenden Datenspeicherbereiches als Belegungsbestätigung von der Datenbasis zurückgesendet wurde.

Die Datenbasis an sich besteht im Prinzip aus zwei Komponenten, zum einen den physikalischen Speicher, der zur Speicherung der von der Datenbasis verwalteten Daten dient, und zum anderen der programmtechnischen Komponente, die u. a. zur Steuerung des Datentransportes und zur Implementierung der die Datenbasis betreffenden Aktionen des Verständigungsverfahrens dient.

In der Regel besteht die programmtechnische Komponente aus mehreren Programmroutinen, die jeweils zur Ausführung spezieller Funktionen vorgesehen sind. Die beiden wichtigsten Programmroutinen sind die Datenbasis-Allokationsroutine und die Datenbasis-Zugriffsroutine. Erstere koordiniert den gesamten der Datenbasis zur Verfügung stehenden physikalischen Speicherbereich. Sie nimmt Speicherbelegungsanträge von den Systemprozessen entgegennimmt und sendet Belegungsbestätigungen zurück, mit denen gewissermaßen eine Berechtigung zur Benutzung eines Speicherbereiches ausgestellt wird. Eine Belegungsbestätigung hat die Form eines Adreßcodewortes, mit dem sich ein Systemprozeß für schreibende oder lesende Zugriffe auf den belegten Datenspeicherbereich an die Datenbasis wendet. Dazu muß dieses Adreßcodewort der Datenbasis-Zugriffsroutine übermittelt werden. Diese führt dann je nach Zugriffswunsch einen lesenden oder schreibenden Zugriff auf den durch das Adreßcodewort bezeichneten Datenspeicherbereich aus.

Obwohl die zentrale Datenhaltung mit Hilfe einer Datenbasis prinzipiell eine hohe Datensicherheit gewährleistet, kann es aufgrund von Fehlfunktionen oder Programmierfehlern vorkommen, daß ein Systemprozeß für den Zugriff auf einen bestimmten Datenspeicherbereich ein fehlerhaftes oder verfälschtes Adreßcodewort übermittelt, und damit fälschlicherweise einen anderen Datenspeicherbereich bezeichnet. So ist es z. B. möglich, daß ein Systemprozeß beim Einrichten der Daten für eine neue Verbindung zwischen zwei Kommunikationspartnern aufgrund eines Fehlers die zu einer anderen, bereits bestehenden Verbindung gehörigen Daten überschreibt und zerstört.

Aus "INTERNATIONAL SWITCHING SYMPOSIUM 1987, Session B3, Paper 3, Bd. 1, 15. März 1987, Phoenix US, Seiten 1-8; J.JAUDIER et al." ist im übrigen ein Verfahren bekannt, bei dem mit Hilfe von 'Segment Descriptoren' Bereiche eines adressierbaren Speichers sogenannten 'Logical Machines' zugeordnet werden, wobei die 'Segment Descriptoren' einen 'access code' aufweisen, mit dem der Zugriffstyp auf den Speicherbereich beschränkt werden kann.

In "NTZ NACHRICHTENTECHNISCHE ZEITSCHRIFT Bd. 42, Nr. 7, Juli 1989, Berlin DE, Seiten 424-426; A. MAHLER" ist erwähnt, daß Programme auf eine Zugriffsberechtigung für adressierte Speichersegmente überprüft werden.

Aufgabe der vorliegenden Erfindung ist es, das Verständigungsverfahren gemäß dem Oberbegriff des Patentanspruchs 1 dahingehend weiterzubilden, daß ein Zugriff mit einem verfälschten Adreßcodewort erkannt werden kann.

Gelöst wird diese Aufgabe erfindungsgemäß durch die im kennzeichnenden Teil des Patentanspruchs 1 angegebenen Merkmale.

Bei dem erfindungsgemäßen Verfahren wird von der Datenbasis-Allokationsroutine zu jedem zu vergebenden Codewort - nachstehend als Adreßcodewort bezeichnet - individuell ein Sicherungscodewort erzeugt, das in der Datenbasis als zu dem betreffenden Adreßcodewort zugehörig gespeichert wird. Als Belegungsbestätigung erhält der betreffende Systemprozeß ein durch das Sicherungscodewort ergänztes Codewort - im folgenden Schlüsselcodewort genannt -, aus dem die Datenbasis-Zugriffsroutine im Falle eines Zugriffsantrags das Adreßcodewort und das Sicherungscodewort ermittelt und das ermittelte Sicherungscodewort mit dem in der Datenbasis gespeicherten Sicherungscodewort vergleicht.

Wird bei dem erfindungsgemäßen Verfahren von einem Systemprozeß ein Zugriff auf einen Datenspeicherbereich unter Vorlage eines verfälschten Schlüsselcodewortes beantragt, so wird dies bei dem Vergleich der Sicherungscodeworte erkannt. Ein Zugriff kann dann auf einfache Weise verhindert werden. Außerdem kann eine Fehlermeldung gebildet werden, die sich u. a. für Diagnosezwecke eignet.

Ein weiterer wesentlicher Vorteil der Erfindung besteht darin, daß für eine Implementierung des erfindungsgemäßen Verfahrens nur in den Datenbasis-Zugriffsroutinen Änderungen vorgenommen werden müssen; für die Systemprozesse bleibt es ohne Bedeutung, ob sie als Belegungsbestätigung ein Adreßcodewort oder ein Schlüsselcodewort erhalten, das durch Codierung aus dem Adreßcodewort und einem Sicherungscodewort entstanden ist.

Vorteilhafte Weiterbildungen der Erfindung ergeben sich aus den Unteransprüchen.

Ein Ausführungsbeispiel der Erfindung wird im folgenden anhand der Zeichnung näher erläutert.

Dabei zeigen
- FIG 1: eine schematische Darstellung der Datenbasis zur Veranschaulichung des Datenflusses beim erfindungsgemäßen Verfahren,
- FIG 2: ein Ablaufdiagramm zur Veranschaulichung der wesentlichen Verfahrensschritte bei der Belegung eines Speicherbereiches,
- FIG 3: ein Ablaufdiagramm zur Veranschaulichung der wesentlichen Verfahrensschritte beim Zugriff auf einen belegten Speicherbereich, und
- FIG 4: ein Ablaufdiagramm zur Veranschaulichung der wesentlichen Verfahrensschritte bei der Freigabe eines belegten Speicherbereiches.

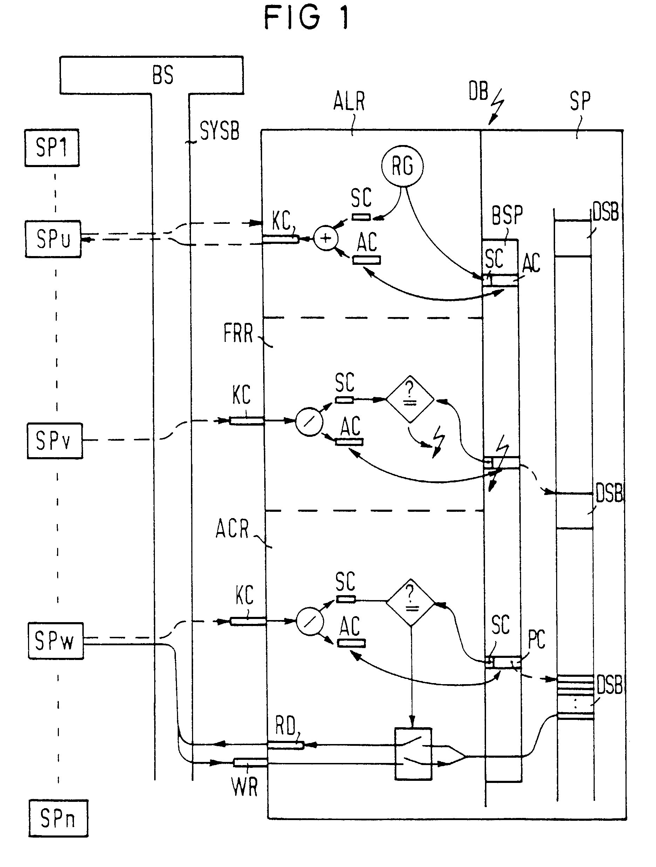

In FIG 1 ist der für das erfindungsgemäße Verfahren wesentliche Datenfluß in der Datenbasis anhand eines funktionalen Blockbildes schematisch dargestellt. Eine Datenbasis DB ist im Prinzip als Systemprozeß anzusehen, der in einer Kommunikationsanlage zur zentralen Koordination und Verwaltung des physikalischen Speicherbereiches dient. Der modular strukturierte programmtechnische Aufbau der Kommunikationsanlage sieht neben der Datenbasis DB eine Vielzahl von Systemprozessen SP1...SPn vor, die zur Ausführung einer jeweiligen Funktion in der Kommunikationsanlage dienen; Systemprozesse SP1...SPn werden in der Regel durch einen Bearbeitungsauftrag aktiviert, der von einem anderen Systemprozeß ausgegangen ist. Zur Koordination dieses komplexen Zusammenspiels zwischen den einzelnen Systemprozessen dient ein gewissermaßen übergeordneter Systemprozeß, das Betriebssystem BS, das im vorliegenden Fall als "Multi-Tasking"-Betriebssystem bezeichnet wird. Dieses Betriebssystem BS dient u. a. auch zur Realisierung eines programmtechnischen Datenweges, eines sogenannten Systembusses SYSB, für die Verständigung der einzelnen Systemprozesse SP1...SPn untereinander und zwischen den Systemprozessen SP1...SPn und der Datenbasis DB.

Ergänzend sei noch bemerkt, daß der Hardware-Aufbau einer Kommunikationsanlage, insbesondere die Ausgestaltung des für den Ablauf der Systemprozesse erforderlichen Prozessorsystems, von der vorliegenden Erfindung nicht betroffen ist, und deshalb im folgenden nicht näher erläutert wird; sollten sich diesbezüglich trotzdem Fragen ergeben, wird auf den in der Beschreibungseinleitung genannten Stand der Technik verwiesen.

Aufgrund der zentralen Bedeutung der Datenbasis DB wird diese häufig auch als Teil des Betriebssystems BS oder als dem Betriebssystem BS unmittelbar zugeordnet bezeichnet.

Die Datenbasis DB besteht aus einer programmtechnischen Komponente und einer "Hardware"-Komponente. Die "Hardware"-Komponente bildet der in einer Kommunikationsanlage physikalisch vorhandene, zur Speicherung von Daten vorgesehene Speicher SP. Die programmtechnische Komponente der Datenbasis DB setzt sich im wesentlichen aus drei Datenbasisroutinen zusammen, einer Datenbasis-Allokationsroutine ALR, einer Datenbasis-Freigaberoutine FRR und einer Datenbasis-Zugriffsroutine ACR, die jeweils eine individuelle Funktion in der Datenbasis DB ausführen. Jede der Datenbasisroutinen kann von den Systemprozessen SP1...SPn durch Mitteilung einer datenbasisroutinenindividuellen Portadresse gezielt angesprochen werden.

Die Datenbasis-Allokationsroutine ALR wird von Systemprozessen SP1...SPn aktiviert, wenn diese zur Hinterlegung von Daten einen Datenspeicherbereich DSB benötigen. Der Datenbasis-Allokationsroutine ALR wird dazu von dem betreffenden Systemprozeß SPl ein Belegungsantrag übermittelt. Die Datenbasis-Allokationsroutine ALR sendet diesem Systemprozeß SPl dann als Belegungsbestätigung ein Schlüsselcodewort KC zurück. Dieses Schlüsselcodewort KC, z. B. ein 16 Bit-Binärwort, ist durch Codierung aus zwei Teilworten entstanden. Als einfachste Form der Codierung ist eine Konkatenation, also eine Hintereinanderreihung der beiden Teilworte anzusehen. Eines dieser Teilworte ist ein Adreßcodewort AC, z. B. ein 15 Bit-Binärwort, das als Zeiger zur Adressierung der Datenspeicherbereiche DSB des physikalischen Speichers SP dient. Das zweite Teilwort, z. B. ein 3 Bit-Binärwort, ist ein Sicherungscodewort SC, das von einem Zufallsgenerator RG erzeugt wird. Sowohl das Sicherungscodewort SC als auch das Adreßcodewort AC werden in einem Belegungsspeicher BSP - einem speziellen Bereich im physikalischen Speicher SP - als einander zugehörig abgespeichert. Der durch das betreffende Adreßcodewort AC eindeutig bezeichnete Datenspeicherbereich DSB ist damit als belegt markiert. Für die Datenspeicherbereiche DB ist in der Regel eine einheitliche Speicherkapazität, z. B. 32 Byte, vorgesehen.

Systemprozesse SP1...SPn, die belegte Datenspeicherbereiche DSB bzw. die in diesen Datenspeicherbereichen hinterlegten Daten nicht mehr benötigen, müssen die betreffenden Datenspeicherbereiche DSB wieder freigeben. Dazu muß das als Belegungsbestätigung für einen betreffenden Datenspeicherbereich DSB von der Datenbasis-Allokationsroutine ALR ausgegebene Schlüsselcodewort KC der Datenbasis-Freigaberoutine FRR zugesandt werden. Die Datenbasis-Freigaberoutine FRR ermittelt aus dem Schlüsselcodewort KC durch Decodierung, im einfachsten Fall durch Separation, das bei der Bildung des Schlüsselcodewortes KC zugrundegelegte Adreßcodewort AC und das Sicherungscodewort SC. Ist das ermittelte Sicherungscodewort SC identisch mit dem im Belegungsspeicher BSP hinterlegten, zu dem betreffenden Adreßcodewort AC als zugehörig vermerkten Sicherungscodewort SC, dann wird der betreffende Eintrag des Adreßcodewortes AC und des Sicherungscodeswortes SC im Belegungsspeicher BSP gelöscht, wodurch der durch das Adreßcodewort AC bezeichnete Datenspeicherbereich DSB als nicht mehr belegt anzusehen ist.

Wurde eine Belegung eines Datenspeicherbereiches DSB von der Datenbasis-Allokationsroutine ALR durch Rücksendung eines Schlüsselcodewortes KC bestätigt, so sind die Systemprozesse berechtigt, auf diesen Datenspeicherbereich DSB lesend oder schreibend zuzugreifen. Dazu muß ein jeweiliger Systemprozeß SPv der Datenbasis-Zugriffsroutine ACR das Schlüsselcodewort KC für den betreffenden Datenspeicherbereich DSB übermitteln. Je nach dem, ob ein schreibender oder lesender Zugriff gewünscht wird und an welcher Stelle im betreffenden Datenspeicherbereich DSB der Zugriff erfolgen soll, d. h. welches der 32 Bytes geändert oder gelesen werden soll, wird die Datenbasis-Zugriffsroutine ACR über eine ihrer zur Entgegennahme des Schlüsselcodewortes KC vorgesehenen Portadressen (im vorliegenden Beispiel 2 x 32) angesprochen.

Das an die Datenbasis-Zugriffsroutine ACR übermittelte Schlüsselcodewort KC wird zunächst durch Decodierung, im einfachsten Fall durch Separation, in das bei der Bildung des Schlüsselcodewortes KC zugrundegelegene Adreßcodewort AC und Sicherungscodewort SC aufgetrennt. Das im Belegungsspeicher BSP zu diesem Adreßcodewort AC zugehörig hinterlegte Sicherungscodewort SC wird mit dem aus dem Schlüsselcodewort KC durch Decodierung ermittelten Sicherungscodewort SC verglichen. Im Falle einer Identität wird die mittels der verwendeten Portadresse ausgewählte Speicherzelle SZ des durch das Adreßcodewort AC bezeichneten Datenspeicherbereiches DSB adressiert.

Im Falle eines lesenden Zugriffes wird der Inhalt dieser Speicherzelle SZ in einem von der Datenbasis-Zugriffsroutine ACR programmtechnisch realisierten Zwischenspeicher BD hinterlegt, den der betreffende Systemprozeß SPw dann ausliest. Bei einem schreibenden Zugriff muß der Systemprozeß SPw den neuen Inhalt einer Speicherzelle SZ in einen von der Datenbasis-Zugriffsroutine ACR ebenso programmtechnisch realisierten Zwischenspeicher WR hinterlegen, von dem dann die Datenbasis-Zugriffsroutine ACR den Inhalt in den Datenspeicherbereich DSB in die betreffende Speicherzelle SZ einschreibt.

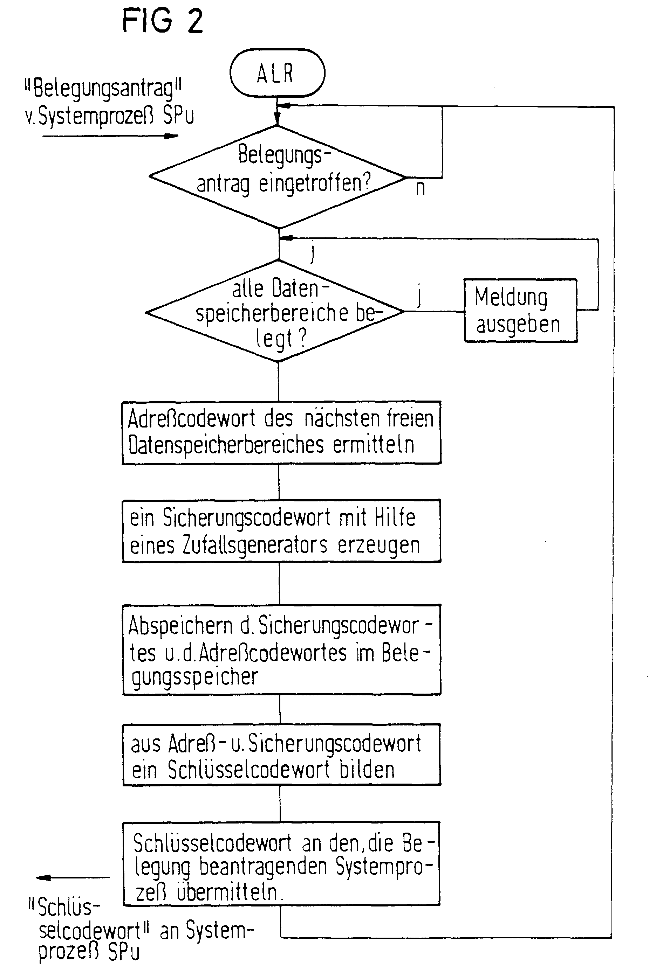

FIG 2 zeigt ein Ablaufdiagramm zur Veranschaulichung der von der Datenbasis-Allokationsroutine ALR nacheinander auszuführenden Verfahrensschritte. Nach dem Eintreffen eines Belegungsantrages von einem Systemprozeß SPu muß anhand der Einträge im Belegungsspeicher BSP überprüft werden, ob noch Datenspeicherbereiche DSB frei sind, die belegt werden können. Ist dies der Fall, wird nach einem bestimmten Schema einer der freien Datenspeicherbereiche DSB anhand des diesen Datenspeicherbereich DSB bezeichnenden Adreßcodewortes AC ausgewählt. Zum vorliegenden Adreßcodewort AC wird dann mit Hilfe eines Zufallsgenerators RG ein Sicherungscodewort SC erzeugt. In vielen Fällen ist ein Adreßcodewort AC mit 13 Bit Länge ausreichend; mit einem 13 Bit-Binärwort lassen sich 2¹³ Datenspeicherbereiche DSB adressieren. Für das Sicherungscodewort SC ist bereits ein Binärwort mit drei Bit ausreichend, so daß sich durch Zusammenfügen des Sicherungscodewortes SC und des Adreßcodewortes AC ein 16 Bit-Binärwort ergibt, das den gängigen Datenbusbreiten entspricht.

Das Adreßcodewort AC und das vom Zufallsgenerator RG erzeugte Sicherungscodewort SC wird im Belegungsspeicher BSP in einer Weise hinterlegt, die eine Zusammengehörigkeit erkennen läßt. Im Belegungsspeicher BSP werden die Adreßcodeworte AC und die zugehörigen Sicherungscodeworte SC aller belegten Datenspeicherbereiche vermerkt. Durch Zusammenfügen des Adreßcodewortes AC und des Sicherungscodewortes SC entsteht - wie bereits erwähnt - ein 16 Bit-Binärwort, das als Schlüsselcodewort KC dem Systemprozeß SPu zugestellt wird, der den zugrundeliegenden Belegungsantrag gestellt hat.

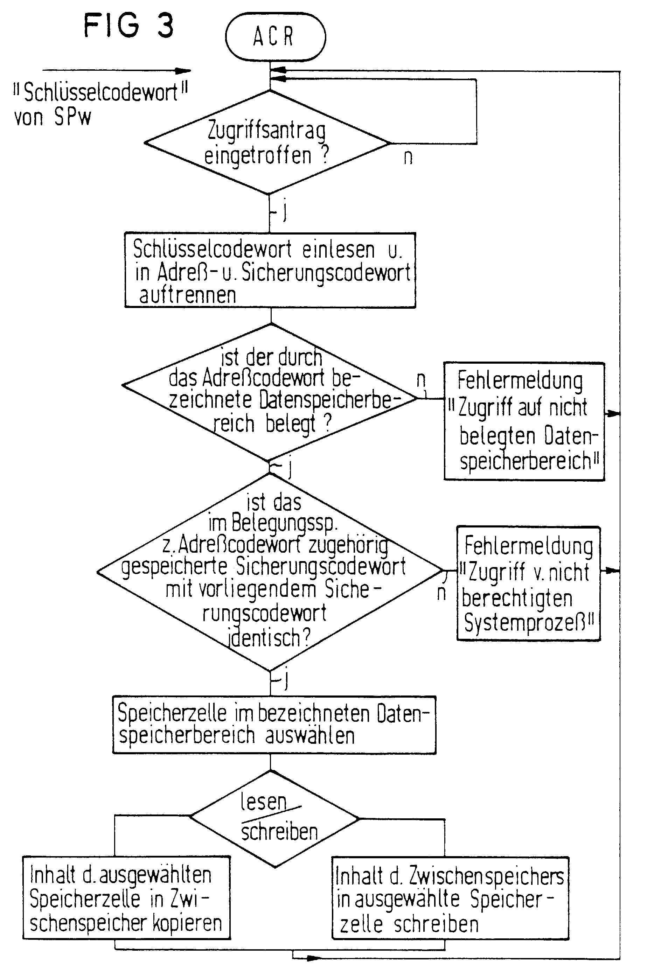

In FIG 3 ist ein Ablaufdiagramm zur Veranschaulichung der wesentlichen Verfahrensschritte in der Datenbasis-Zugriffsroutine ACR dargestellt. Sobald ein Zugriffsantrag durch Vorliegen eines Schlüsselcodewortes KC erkannt wird, wird dieses Schlüsselwort KC eingelesen und mit Hilfe eines Decodierers in das Adreßcodewort AC und das Sicherungscodewort SC aufgetrennt.

Ist das Schlüsselcodewort KC nur durch Hintereinanderreihen des Adreßcodewortes AC und des Sicherungscodewortes SC gebildet (wie in Zusammenhang mit FIG 2 vorgeschlagen), so werden die ersten drei Bit des Schlüsselcodewortes KC als Sicherungscodewort SC und die verbleibenden 13 Bit des Schlüsselcodewortes KC als Adreßcodewort AC gewertet.

Das so gewonnene Adreßcodewort AC wird im Belegungsspeicher BSP gesucht. Findet sich kein Eintrag im Belegungsspeicher BSP, so ist der durch dieses Adreßcodewort AC bezeichnete Datenspeicherbereich DSB nicht belegt. Damit darf ein Zugriff auf diesen Datenspeicherbereich DSB auch nicht ausgeführt werden. Eine Fehlermeldung wird erzeugt.

Wird das Adreßcodewort AC im Belegungsspeicher BSP gefunden, dann wird ein Vergleich zwischen dem im Belegungsspeicher BSP zu dem betreffenden Adreßcodewort AC gespeicherten Sicherungscodewort SC und dem mit Hilfe des Decodierers aus dem vorliegenden Schlüsselcodewort KC erzeugten Sicherungscodewort SC vorgenommen. Ist eine Identität nicht gegeben, so liegt ein Zugriffsantrag mit einem verfälschten Schlüsselcodewort KC vor; der betreffende Systemprozeß SPw ist damit nicht berechtigt, auf den durch das Adreßcodewort AC bezeichneten Datenspeicherbereich DSB zuzugreifen. Eine Fehlermeldung wird ausgegeben.

Besteht eine Identität zwischen dem Sicherungscodeworten SC, muß ermittelt werden, auf welche Speicherzelle SZ innerhalb des angesprochenen Datenspeicherbereiches DSB der beantragte Zugriff erfolgen soll. Dies erkennt die Datenbasis-Zugriffsroutine ACR z. B. daran, welche Portadresse von einem Systemprozeß SPw zur Vorlage des Schlüsselcodewortes KC gewählt wurde. Des weiteren wird eine Entscheidung getroffen, ob es sich um einen lesenden oder schreibenden Zugriffsantrag handelt; dies geschieht wiederum anhand der von einem Systemprozeß bei der Vorlage des Schlüsselcodewortes KC verwendeten Portadresse.

Handelt es sich bei dem Zugriffsantrag um einen lesenden Zugriff, so wird die betreffende Speicherzelle SZ in dem durch das Adreßcodewort AC bezeichneten Datenspeicherbereich DSB adressiert und in einen Zwischenspeicher RD hinterlegt, die der den Zugriff beantragende Systemprozeß SPw dann auslesen kann. Handelt es sich um einen schreibenden Zugriff, so wird der Inhalt eines Zwischenspeichers WR, in den der den Zugriff beantragende Systemprozeß SPw das zu schreibende Datum hinterlegt hat, ausgelesen und in die betreffende Speicherzelle SZ des Datenspeicherbereiches DSB eingetragen.

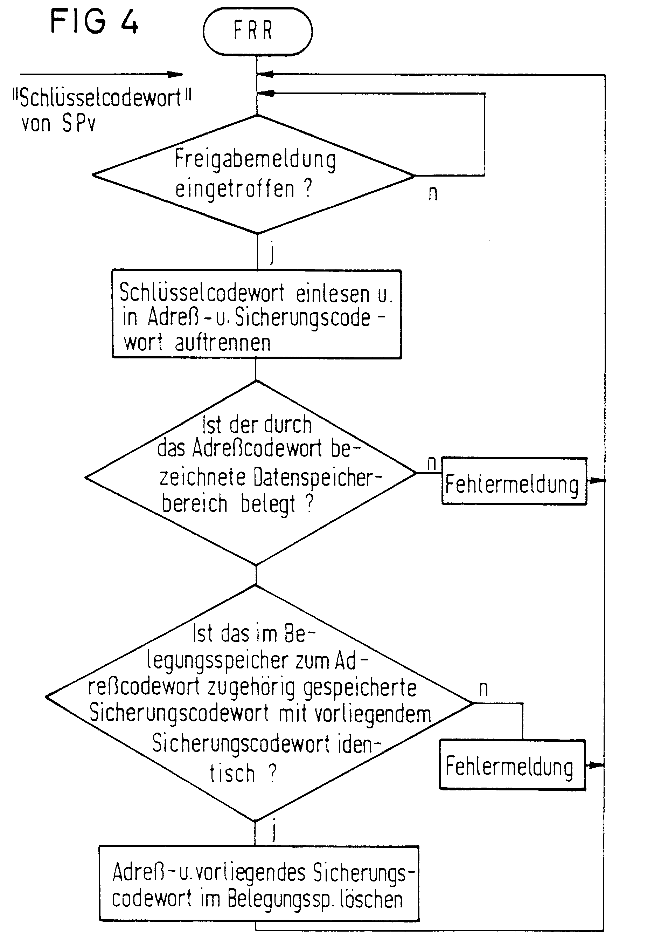

In FIG 4 ist ein Ablaufdiagramm zur Veranschaulichung der von der Datenbasis-Freigaberoutine FRR ausgeführten Verfahrensschritte dargestellt. Wird von einem Systemprozeß SPv der Datenbasis-Freigaberoutine FRR ein Schlüsselcodewort KC übermittelt, wird dies als Freigabemeldung für den durch das betreffende Schlüsselcodewort KC bezeichneten Datenspeicherbereichs DSB verstanden. Das vorgelegte Schlüsselcodewort KC wird mit Hilfe eines Decodierers in das Adreßcodewort AC und das Sicherungscodewort SC - wie in Zusammenhang mit FIG 3 bereits erläutert - aufgetrennt. Danach wird der Belegungsspeicher BSP nach diesem Adreßcodewort AC durchsucht und für den Fall, daß das Adreßcodewort AC nicht im Belegungsspeicher BSP gefunden werden kann, eine Fehlermeldung abgegeben. Andernfalls wird im Belegungsspeicher BSP der Eintrag dieses Adreßcodewortes AC und des ihm zugehörigen Sicherungscodewortes SC gelöscht oder für ungültig erklärt, wodurch der durch das Adreßcodewort AC bezeichnete Datenspeicherbereich DSB freigegeben wird, also nicht mehr belegt ist.

## Patentansprüche

1. Verfahren zum berechtigungsverifizierten Zugriff auf temporär belegbare Datenspeicherbereiche (DSB) in einer Datenbasis (DB) einer programmgesteuerten Kommunikationsanlage mit einer Vielzahl von Systemprozessen (SP1...SPn), wobei
- die Datenbasis (DB) eine Datenbasis-Allokationsroutine (ALR) aufweist,
an die Belegungsanträge für Datenspeicherbereiche (DSB) übermittelt werden und
die als Belegungsbestätigung für Datenspeicherbereiche (DSB) individuell zugeordnete Codeworte zurücksendet, und
- die Datenbasis (DB) eine Datenbasis-Zugriffsroutine (ACR) aufweist, der die Codeworte für Zugriffe auf die Datenspeicherbereiche (DSB) zugeleitet werden,
**dadurch gekennzeichnet**,
daß von der Datenbasis-Allokationsroutine (ALR) bei Belegung der Datenspeicherbereiche (DSB) jeweils ein zur Erzeugung eines ergänzten Codewortes dienendes Sicherungscodewort (SC) gebildet wird, das als das Codewort zurückgesendet wird, daß von der Datenbasis-Allokationsroutine (ALR) in einem Belegungsspeicher (BSP) das Sicherungscodewort (SC) als dem betreffenden Datenspeicherbereich (DSB) zugeordnet vermerkt wird,
daß der Datenbasis-Zugriffsroutine (ACR) für Zugriffe auf Datenspeicherbereiche (DSB) jeweils das ergänzte Codewort zugeleitet wird, aus dem von der Datenbasis-Zugriffsroutine (ACR) das Sicherungscodewort (SC) extrahiert und mit dem im Belegungsspeicher (BSP) als dem betreffenden Datenspeicherbereich (DSB) zugeordnet vermerkten Sicherungscodewort (SC) verglichen wird.

2. Verfahren nach Anspruch 1,
**dadurch gekennzeichnet**,
daß das ergänzte Codewort durch Anfügen des Sicherungscodewortes (SC) gebildet wird.

3. Verfahren nach Anspruch 1 oder 2,
**dadurch gekennzeichnet**,
daß das Sicherungscodewort (SC) jeweils mittels eines Zufallsgenerators (RG) erzeugt wird.

## Claims

1. Method for access, with a verification for authorization, to temporarily allocatable data memory areas (DSB) in a database (DB) of a program-controlled digital PBX with a number of system processes (SP1...SPn),
- the database (DB) having a database allocation routine (ALR),
to which allocation requests for data memory areas (DSP) are transferred, and
which sends back individually assigned code words as allocation confirmation for data memory areas (DSB), and
- the database (DB) has a database access routine (ACR) to which the code words for access operations to the data memory areas (DSB) are fed,
characterized in that, when the data memory areas (DSB) are allocated, in each case a security code word (SC) which serves to generate a supplemented code word is formed by the database allocation routine (ALR) and is sent back as code word,
in that the database allocation routine (ALR) registers the security code word (SC), in an allocation memory (BSP), as having been assigned to the respective data memory area (DSB),
in that in each case the supplemented code word is fed to the database access routine (ACR) for access operations to data memory areas (DSB), from which code word the security code word (SC) is extracted by the database access routine (ACR) and is compared with the security code word (SC) which is registered in the allocation memory (BSP) as having been assigned to the respective data memory area (DSB).

2. Method according to Claim 1, characterized in that the supplemented code word is formed by adding the security code word (SC).

3. Method according to Claim 1 or 2, characterized in that the security code word (SC) is generated in each case by means of a random-charge generator (RG).

## Revendications

1. Procédé pour l'accès avec vérification d'autorisation à des zones de mémoire de données (DSB) à allocation temporaire dans une base de données (DB) d'un central de communication à commande programmée comportant une multiplicité de processus de système (SP1 à SPn), dans lequel
- la base de données (DB) comporte une routine d'allocation en base de données (ALR) à laquelle sont transmises des demandes d'allocation pour des zones de mémoire de données (DSB) et qui renvoie comme autorisation d'allocation pour des zones de mémoire de données (DSB) des mots de code individuellement associés, et
- la base de données (DB) comporte une routine d'accès en base de données (ACR) à laquelle sont envoyés les mots de code pour des accès aux zones de mémoire de données (DSB),
caractérisé par le fait que
la routine d'allocation en base de données (ALR), lors de l'allocation des zones de mémoire de données (DSB), forme à chaque fois un mot de code de sécurité (SC) qui sert à produire un mot de code étendu et qui est renvoyé comme mot de code,
la routine d'allocation en base de données (ALR) marque dans une mémoire d'allocation (BSP) le mot de code de sécurité (SC) comme associé à la zone de mémoire de données (DSB) considérée,
la routine d'accès en base de données (ACR) reçoit pour des accès à des zones de mémoire de données (DSB) à chaque fois le mot de code étendu à partir duquel la routine d'accès en base de données (ACR) extrait le mot de code de sécurité (SC) et le compare au mot de code de sécurité (SC) marqué dans la mémoire d'allocation (BSP) comme associé à la zone de mémoire de données (DSB) considérée.

2. Procédé selon la revendication 1,
caractérisé par le fait que l'on forme le mot de code étendu en ajoutant le mot de code de sécurité (SC).

3. Procédé selon la revendication 1 ou 2,
caractérisé par le fait que l'on produit le mot de code de sécurité (SC) à chaque fois au moyen d'un générateur de valeur aléatoire (RG).
